# EUROPEAN PATENT APPLICATION

(11) **EP 4 345 755 A1**
(43) Date of publication of application: **03.04.2024**
(21) Application number: 23186371.3
(22) Date of filing: 19.07.2023
(51) Int. Cl.: G06T 13/40

(54) **EXPRESSION TRANSFER TO STYLIZED AVATARS**

(30) Priority: 22.07.2022 US 202263391645 P; 18.11.2022 US 202218056986
(71) Applicant: Meta Platforms Technologies, LLC, Menlo Park, CA 94025 (US)
(72) Inventor: OCAMPO, Christopher John, Menlo Park (US); CADOGAN, Milton, Menlo Park (US); GUO, Peihong, Menlo Park (US)
(74) Representative: Murgitroyd & Company

(57) **Abstract**

A method for personalizing stylized avatars for enhanced reality applications is provided. The method includes capturing an image of a facial expression of a first subject, identifying, in the image, a one or more features indicative of a personal characteristic of the first subject, identifying, from a set of standard expressions in a human model, a selected expression based on the facial expression of the first subject, transferring the one or more features indicative of the personal characteristic of the first subject to the selected expression in the human model, and providing the human model to an immersive reality application for display on a client device. A memory storing instructions, a processor, and a system caused by the processor to perform the above method when executing the instructions, are also provided.

## Description

### CROSS-REFERENCE TO RELATED APPLICATIONS

The present disclosure is related and claims priority under 35 U.S.C. §1 19(e) to US Prov. Appln. No. 63/391,645, entitled EXPRESSION TRANSFER TO STYLIZED AVATARS to Christopher J. OCAMPO et al., filed on July 22, 2022, the contents of which are hereby incorporated by reference in their entirety, for all purposes.

### BACKGROUND

### Field

The present disclosure is directed to personalization of stylized avatars for enhanced reality applications. More specifically, the present disclosure is related to transfer of personalized facial gestures from a subject onto a stylized avatar for creating a personalized model for the subject.

### Related Art

Stylized avatars and standardized facial gestures thereof are commonly used to recreate enhanced reality environments. This reduces substantially the computational cost of the application, enabling its widespread use and adaptation using current technology. Stylized avatars are also used for three-dimensional human models where well-known cartoon characters may be used to represent subjects in an immersive application. However, the results are fairly simplistic as all personal characteristics of a specific subject are lost in the stylized models. Accordingly, a more realistic representation of a different subject is desirable, to provide a true sense of realism and expression to immersive applications, and to drive more affinity between users and their associated avatars.

### SUMMARY

In a first aspect, a computer-implemented method includes capturing an image of a facial expression of a first subject, identifying, in the image, a one or more features indicative of a personal characteristic of the first subject, identifying, from a set of standard expressions in a human model, a selected expression based on the facial expression of the first subject, transferring the one or more features indicative of the personal characteristic of the first subject to the selected expression in the human model, and providing the human model to an immersive reality application for display on a client device.

In some embodiments, the first subject is a user of an enhanced reality headset, and capturing the image of the facial expression of the first subject comprises capturing the image with a camera mounted on the enhanced reality headset.

In some embodiments, identifying the one or more features indicative of a personal characteristic of the first subject comprises selecting, from a mesh superimposed on the image of the facial expression of the first subject, a group of vertices that has moved by an amount larger than a selected threshold.

In some embodiments, identifying a one or more features indicative of a personal characteristic of the first subject comprises finding one or more critical points in a derivative tensor associated with a motion of a mesh for the image of the facial expression of the first subject.

In some embodiments, identifying the one or more features indicative of a personal characteristic of the first subject comprises identifying a displacement of one or more key points in a three-dimensional mesh associated with the image of the first subject.

In some embodiments, identifying a selected expression based on the facial expression of the first subject comprises finding a measure of a distance between multiple vertices in a mesh associated with the facial expression of the first subject and multiple vertices in a mesh associated with the human model having the selected expression.

In some embodiments, the method further comprises selecting the human model as a stylized avatar of the human model.

In some embodiments, transferring the one or more features indicative of a personal characteristic of the first subject to the selected expression in the human model comprises copying a movement of a group of vertices in a mesh for the first subject to a corresponding group of vertices in a mesh for the human model.

In some embodiments, the client device is with a user, and the method further comprises providing a second stylized human model modified with a facial expression of the user to the immersive reality application for display on a second client device with the first subject.

In some embodiments, the immersive reality application is shared between the first subject and a second subject, and the method further comprises providing a second stylized human model modified with a facial expression of the second subject to the display on the client device.

In a second aspect, a system includes a memory storing multiple instructions, and one or more processors configured to execute the instructions to perform operations. The operations include to capture an image of a facial expression of a first subject, to identify, in the image, a one or more features indicative of a personal characteristic of the first subject, to identify, from a set of standard expressions in a human model, a selected expression based on the facial expression of the first subject, to transfer the one or more features indicative of the personal characteristic of the first subject to the selected expression in the human model, and to provide the human model to an immersive reality application for display on a client device.

In some embodiments, the first subject is a user of an enhanced reality headset, and to capture the image of the facial expression of the first subject the one or more processors execute instructions to capture the image with a camera mounted on the enhanced reality headset.

In some embodiments, to identify the one or more features indicative of a personal characteristic of the first subject the one or more processors execute instructions to select, from a mesh superimposed on the image of the facial expression of the first subject, a group of vertices that has moved by an amount larger than a selected threshold.

In some embodiments, to identify a one or more features indicative of a personal characteristic of the first subject, the one or more processors execute instructions to find one or more critical points in a derivative tensor associated with a motion of a mesh for the image of the facial expression of the first subject.

In some embodiments, to identify the one or more features indicative of a personal characteristic of the first subject the one or more processors execute instructions to identify a displacement of one or more key points in a three-dimensional mesh associated with the image of the first subject.

In some embodiments, to identify a selected expression based on the facial expression of the first subject the one or more processors execute instructions to find a measure of a distance between multiple vertices in a mesh associated with the facial expression of the first subject and multiple vertices in a mesh associated with the human model having the selected expression.

In some embodiments, the one or more processors further execute instructions to select the human model as a stylized avatar of the human model.

In some embodiments, to transfer the one or more features indicative of a personal characteristic of the first subject to the selected expression in the human model the one or more processors execute instructions to copy a movement of a group of vertices in a mesh for the first subject to a corresponding group of vertices in a mesh for the human model.

In some embodiments, the client device is with a user, wherein the one or more processors further execute instructions to provide a second stylized human model modified with a facial expression of the user to the immersive reality application for display on a second client device with the first subject.

In some embodiments, the immersive reality application is shared between the first subject and a second subject, and the one or more processors further execute instructions to provide a second stylized human model modified with a facial expression of the second subject to the display on the client device.

In other embodiments, a non-transitory, computer-readable medium stores instructions which, when executed by a processor, cause a computer to perform a method. The method includes capturing an image of a facial expression of a first subject, identifying, in the image, a one or more features indicative of a personal characteristic of the first subject, identifying, from a set of standard expressions in a human model, a selected expression based on the facial expression of the first subject, transferring the one or more features indicative of the personal characteristic of the first subject to the selected expression in the human model, and providing the human model to an immersive reality application for display on a client device.

In yet other embodiments, a system includes a first means to store instructions, and a second means to execute the instructions to cause the system to perform a method. The method includes capturing an image of a facial expression of a first subject, identifying, in the image, a one or more features indicative of a personal characteristic of the first subject, identifying, from a set of standard expressions in a human model, a selected expression based on the facial expression of the first subject, transferring the one or more features indicative of the personal characteristic of the first subject to the selected expression in the human model, and providing the human model to an immersive reality application for display on a client device.

These and other embodiments will become clear to one of ordinary skills in the art, in view of the below disclosure.

### BRIEF DESCRIPTION OF THE FIGURES

FIG. 1 illustrates a network architecture configured for transferring personalized expressions to stylized avatars, according to some embodiments.
FIG. 2 is a block diagram illustrating a client device and a server for use in the architecture of FIG. 1, according to some embodiments.
FIG. 3 illustrates multiple standard expressions in a stylized avatar, according to some embodiments.
FIG. 4 illustrates the tracking of personalized expressions in a video capture of a subject's face, according to some embodiments.
FIG. 5 illustrates an output set of personalized stylized avatars shaped according to the subject from FIG 4.
FIG. 6 illustrates a blending step where a subject's personal features or expressions are merged into a stylized avatar based on a different human model, according to some embodiments.
FIG. 7 illustrates a comparison between personalized expression transfer from a subject to a model in a synthesized avatar, according to some embodiments.
FIGS. 8A-8B include more exemplary embodiments for transferring subject expressions into a stylized avatar model, to create a personalized model, according to some embodiments.
FIG. 9 is a flowchart illustrating steps in a method for transferring personalized expressions to stylized avatars, according to some embodiments.
FIG. 10 is a block diagram illustrating components in a computer system for performing methods as disclosed herein, according to some embodiments.

In the figures, the same or similar reference numerals are associated with the same or similar features or attributes, unless explicitly stated otherwise.

### DETAILED DESCRIPTION

In the following detailed description, numerous specific details are set forth to provide a full understanding of the present disclosure. It will be apparent, however, to one ordinarily skilled in the art, that the embodiments of the present disclosure may be practiced without some of these specific details. In other instances, well-known structures and techniques have not been shown in detail so as not to obscure the disclosure.

### General Remarks

In some embodiments, avatars and other models used for VR/AR applications may be too computationally intensive due to the high-resolution rendering of photorealistic models of a human head. However, the constraint for such modeling to be used in real time is costly in terms of computational capacity and related power requirements and time delays and offsets. On the other hand, use of stylized avatars or models for three-dimensional (3D) rendition of human faces is substantially simpler. The drawback here is that the stylized model has a given set of expressions that is the same for any subject that is represented (with perhaps a gender adaptation being one relevant distinction). This problem may become highly relevant when two different people are being rendered by the same stylized avatar. Then, unless a personalization scheme is included that distinguishes between the two individuals, a confusing scene may be recreated unwittingly.

To resolve the above problems, the present disclosure includes expression fitting of a given subject to modify a stylized avatar in a singular manner that identifies a specific subject.

In some configurations, a stylized avatar that has personalized features from a subject may be desirable for stylistic or esthetic reasons. For example, one or more subjects may desire to participate in a role-playing, cartoonish version or scene with well-known super-heroes or characters. Accordingly, stylized avatars for different characters may be assigned to different participants in the event and personalized accordingly. This will in turn create a stronger sense of connection between users and their avatars, thus enhancing the immersive reality experience and making it more unique and distinctive. An immersive reality experience that provides the above capabilities will have a strong appeal to a wide community of users.

### Example System Architecture

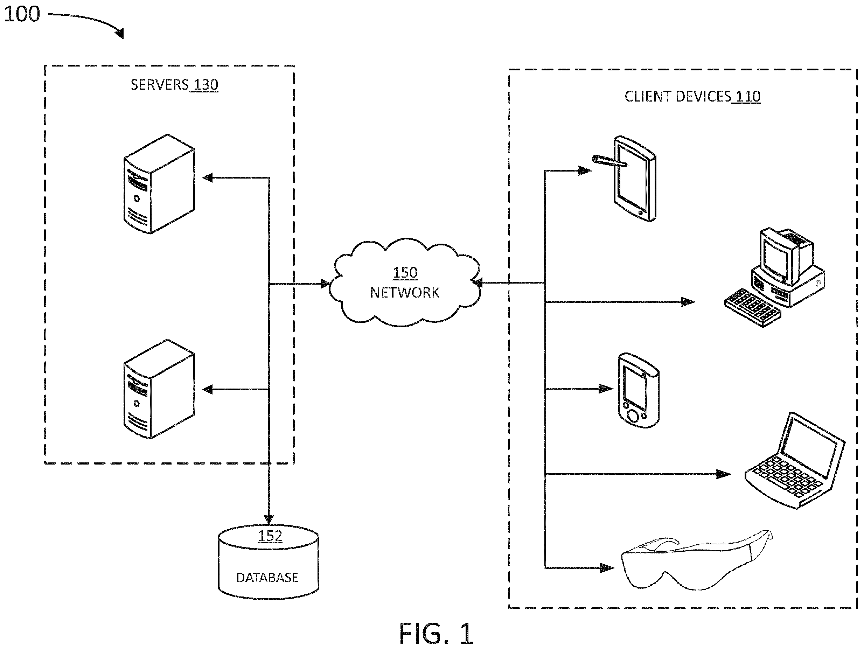

FIG. 1 illustrates an example architecture 100 suitable for accessing an avatar engine, according to some embodiments. Architecture 100 includes servers 130 communicatively coupled with client devices 110 and at least one database 152 over a network 150. One of the many servers 130 is configured to host a memory including instructions which, when executed by a processor, cause the server 130 to perform at least some of the steps in methods as disclosed herein. In some embodiments, the processor is configured to control a graphical user interface (GUI) for the user of one of client devices 110 accessing the avatar engine with a social network application. Accordingly, the processor may include a dashboard tool, configured to display components and graphic results to the user via the GUI. For purposes of load balancing, multiple servers 130 can host memories including instructions to one or more processors, and multiple servers 130 can host a history log and a database 152 including multiple training archives used for the avatar engine. Moreover, in some embodiments, multiple users of client devices 110 may access the same avatar engine to run one or more searches within a social network. In some embodiments, a single user with a single client device 110 may provide images and data to train one or more machine learning models running in parallel in one or more servers 130. Accordingly, client devices 110 and servers 130 may communicate with each other via network 150 and resources located therein, such as data in database 152.

Servers 130 may include any device having an appropriate processor, memory, and communications capability for hosting the avatar engine including multiple tools associated with it. The avatar engine may be accessible by various clients 110 over network 150. Client devices 110 can be, for example, desktop computers, mobile computers, tablet computers (*e*.*g*., including e-book readers), mobile devices (*e.g.*, a smartphone or PDA), or any other device having appropriate processor, memory, and communications capabilities for accessing the avatar engine on one or more of servers 130. In some embodiments, client devices 110 may include VR/AR headsets configured to run an immersive reality application supported by one or more of servers 130. Network 150 can include, for example, any one or more of a local area tool (LAN), a wide area tool (WAN), the Internet, and the like. Further, network 150 can include, but is not limited to, any one or more of the following tool topologies, including a bus network, a star network, a ring network, a mesh network, a star-bus network, tree or hierarchical network, and the like.

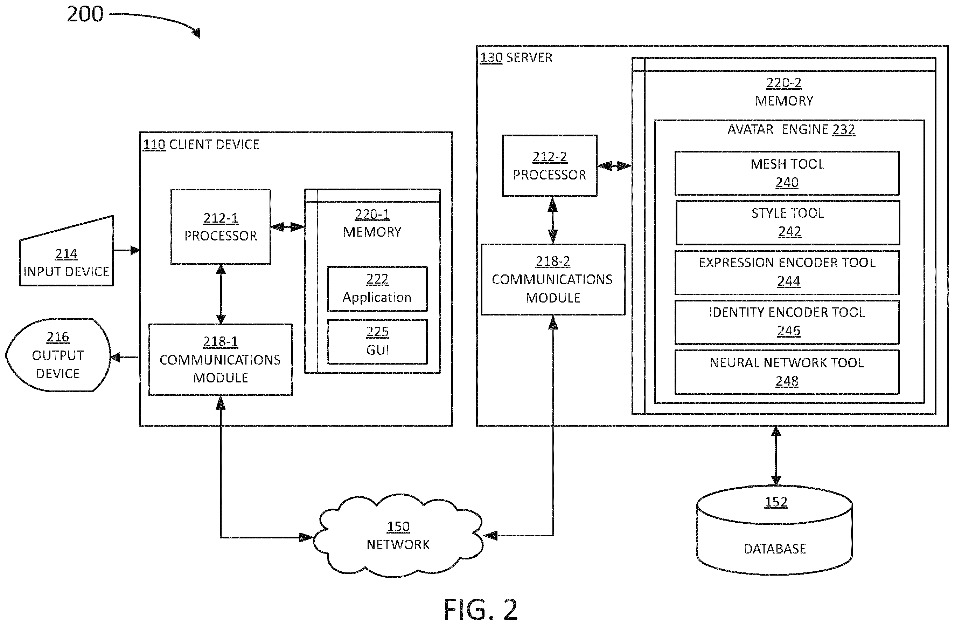

FIG. 2 is a block diagram 200 illustrating an example server 130, client device 110, and database 152 from architecture 100, according to certain aspects of the disclosure. Client device 110 and server 130 are communicatively coupled over network 150 via respective communications modules 218-1 and 218-2 (hereinafter, collectively referred to as "communications modules 218"). Communications modules 218 are configured to interface with network 150 to send and receive information, such as data, requests, responses, and commands to other devices via network 150. Communications modules 218 can be, for example, modems or Ethernet cards, and may include radio hardware and software for wireless communications (*e*.*g*., via electromagnetic radiation, such as radiofrequency -RF-, near field communications -NFC-, Wi-Fi, and Bluetooth radio technology). A user may interact with client device 110 via an input device 214 and an output device 216. Input device 214 may include a mouse, a keyboard, a pointer, a touchscreen, a microphone, a joystick, a virtual joystick, and the like. In some embodiments, input device 214 may include cameras, microphones, and sensors, such as touch sensors, acoustic sensors, inertial motion units -IMUs- and other sensors configured to provide input data to a VR/AR headset. For example, in some embodiments, input device 214 may include an eye tracking device to detect the position of a user's pupil in a VR/AR headset. Output device 216 may be a screen display, a touchscreen, a speaker, and the like. Client device 110 may include a memory 220-1 and a processor 212-1. Memory 220-1 may include an application 222 and a GUI 225, configured to run in client device 110 and couple with input device 214 and output device 216. Application 222 may be downloaded by the user from server 130 and may be hosted by server 130. In some embodiments, client device 110 is a VR/AR headset and application 222 is an immersive reality application. In some embodiments, client device 110 is a mobile phone used to collect a video or picture and upload to server 130 using a video or image collection application 222, to store in training database 152.

Server 130 includes a memory 220-2, a processor 212-2, and communications module 218-2. Hereinafter, processors 212-1 and 212-2, and memories 220-1 and 220-2, will be collectively referred to, respectively, as "processors 212" and "memories 220." Processors 212 are configured to execute instructions stored in memories 220. In some embodiments, memory 220-2 includes an avatar engine 232. Avatar engine 232 may share or provide features and resources to GUI 225, including multiple tools associated with stylization, personalization, and animation, or design applications that use avatars retrieved with avatar engine 232 (*e.g.*, application 222). The user may access avatar engine 232 through application 222, installed in a memory 220-1 of client device 110. Accordingly, application 222, including GUI 225, may be installed by server 130 and perform scripts and other routines provided by server 130 through any one of multiple tools. Execution of application 222 may be controlled by processor 212-1.

Avatar engine 232 may include a mesh tool 240, a style tool 242, an expression encoder tool 244, an identity encoder tool 246, and a neural network tool 248. Mesh tool 240 generates a three-dimensional (3D) mesh that forms a solid model of a subject (*e*.*g*., avatar) based on captured images or stylistic representations of the subject. The stylistic representation may be hand drawings or computer generated drawings, of different views of a subject from different directions. Style tool 242 determines, or classifies, the style in which a given subject is represented in an avatar. Expression encoder tool 244 incorporates a facial expression onto the avatar. In some embodiments, there are a selected number of expressions that can be handled, stored in database 152. Identity encoder tool 246 determines the identification features of the avatar which provides a unique identity to the model. Identity encoder tool 246, for example, may identify that a certain subject furrows some areas in the face for a generic laughter expression. Neural network tool 248 trains mesh tool 240, style tool 242, expression encoder tool 244, and identity encoder tool 246 in avatar engine 232 to provide personalized, stylistic avatars for a VR/AR application 222.

In some embodiments, neural network tool 248 may be part of one or more machine learning models stored in a database 252. Database 252 includes training archives and other data files that may be used by avatar engine 232 in the training of a machine learning model, according to the input of the user through application 222. Moreover, in some embodiments, at least one or more training archives or machine learning models may be stored in either one of memories 220 and the user may have access to them through application 222.

Neural network tool 248 may include algorithms trained for the specific purposes of the engines and tools included therein. The algorithms may include machine learning or artificial intelligence algorithms making use of any linear or non-linear algorithm, such as a neural network algorithm, or multivariate regression algorithm. In some embodiments, the machine learning model may include a neural network (NN), a convolutional neural network (CNN), a generative adversarial neural network (GAN), a deep reinforcement learning (DRL) algorithm, a deep recurrent neural network (DRNN), a classic machine learning algorithm such as random forest, k-nearest neighbor (KNN) algorithm, k-means clustering algorithms, or any combination thereof. More generally, the machine learning model may include any machine learning model involving a training step and an optimization step. In some embodiments, training database 252 may include a training archive to modify coefficients according to a desired outcome of the machine learning model. Accordingly, in some embodiments, avatar engine 232 is configured to access training database 252 to retrieve documents and archives as inputs for the machine learning model. In some embodiments, avatar engine 232, the tools contained therein, and at least part of training database 252 may be hosted in a different server that is accessible by server 130 or client device 110.

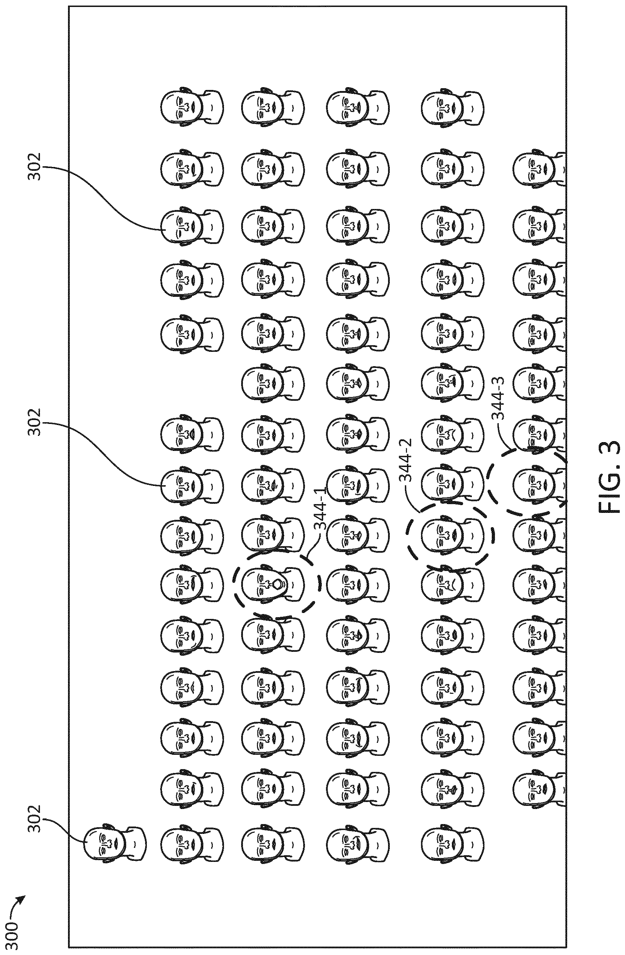

FIG. 3 illustrates a panel 300 with multiple standard expressions 344 in a stylized avatar 302, according to some embodiments. In some embodiments, VR/AR applications may include up to seventy-two (72, or more) facial expressions 344-1, 344-2, and 344-3 among many others (hereinafter, collectively referred to as "expressions 344") that are produced by well-known motion or contraction of the different facial muscles in a human head. Each of expressions 344 indicates a well-known combination of facial muscle activation, indicative of a specific mood, gesture, or reaction of a human character. For example, an astonished expression 344-1 may include a jaw dropping feature with eyes wide open. Other expressions 344 may include a "sceptic" expression 344-2, or a smirk 344-3. While style and certain aspects of each expression 344 may be generic (*e*.*g*., independent of the different subject making the expressions), there are personalized features that make each individual unique, even though many may perform the same generic expression 344.

In a real-time capture of a subject's face, the system finds the closest match within generic avatar's expressions 344 (*e.g.*, using expression encoder 244). Then, the system modifies the closest match with at least one or more of the subject's personalized features (*e*.*g*., using identity encoder 246), and renders the modified closest match as a model for an immersive reality application. The stylized rendition of the subject is thus personalized and unique to the subject, and provides a streamlined representation that the subject may find highly desirable or appealing.

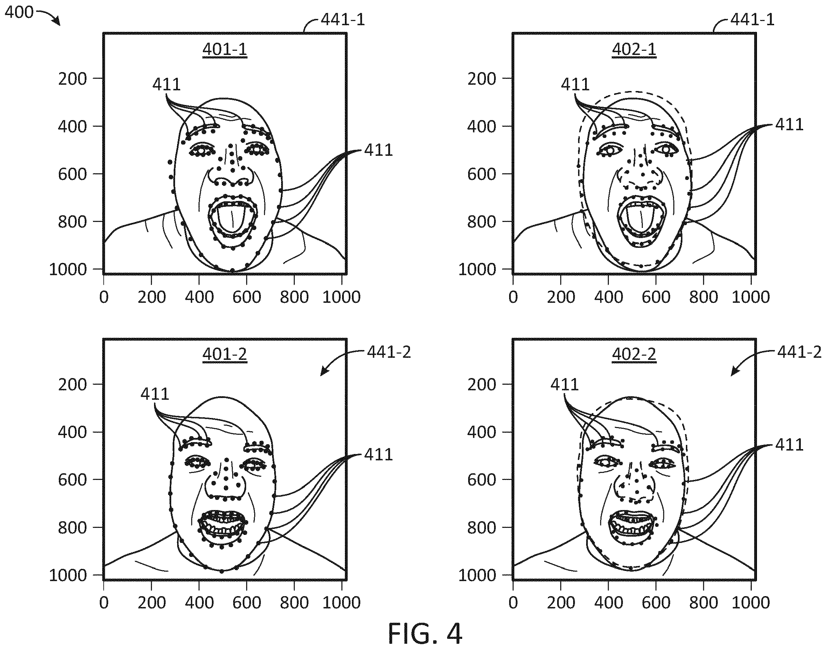

FIG. 4 illustrates a tracking 400 of personalized expressions 441-1 and 441-2 (hereinafter, collectively referred to as "expressions 441") in a video capture of images 401-1 and 401-2 of a subject's face (hereinafter, collectively referred to a ("source images 401"), according to some embodiments. A number of points of interest 411 in a mesh over a stylized avatar 402-1 and 402-2 (hereinafter, collectively referred to as "avatars 402") are tracked for positioning and movement. Points 411 may be selected by the amount of displacement, or the speed of displacement, which may be indicative of a personalized feature associated with the subject.

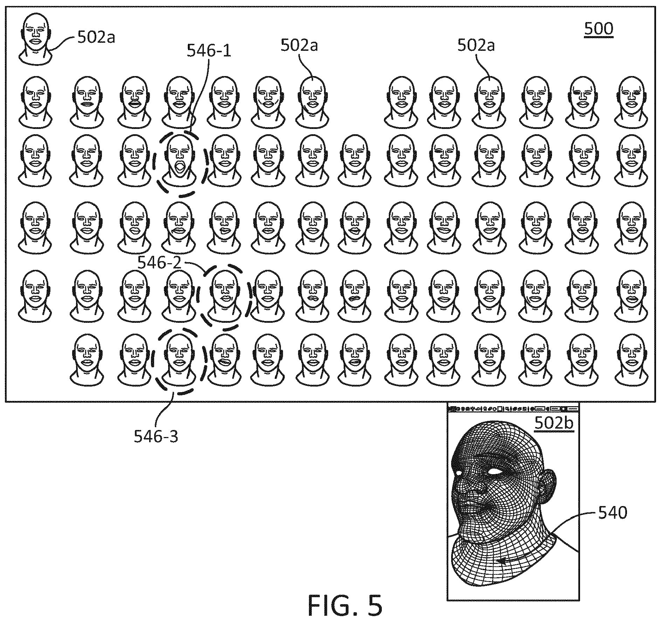

FIG. 5 illustrates an output set 500 of a personalized stylized avatar 502a shaped according to a subject (*e.g.*, avatars 402). This is the output set of a user's "Expression fitting" *(cf.* expression encoder 244) and "Identity fitting" (*cf.* identity encoder 446) combined to represent the user specific blend shape set. Expressions 546-1, 546-2, and 546-3, among many others (hereinafter, collectively referred to as "personalized expressions 546") are the same as expressions 344, except they are personalized according to the style of avatar 502a, as determined by a style tool (*cf.* style tool 242). Also shown in the figure is a surface mesh 540 provided by a tool as disclosed herein (*cf.* mesh tool 240) over a personalized stylized avatar 502b. Mesh 540 includes points whose position and movement may be indicative of personalized gestures, ticks, and other facial characteristics of the subject.

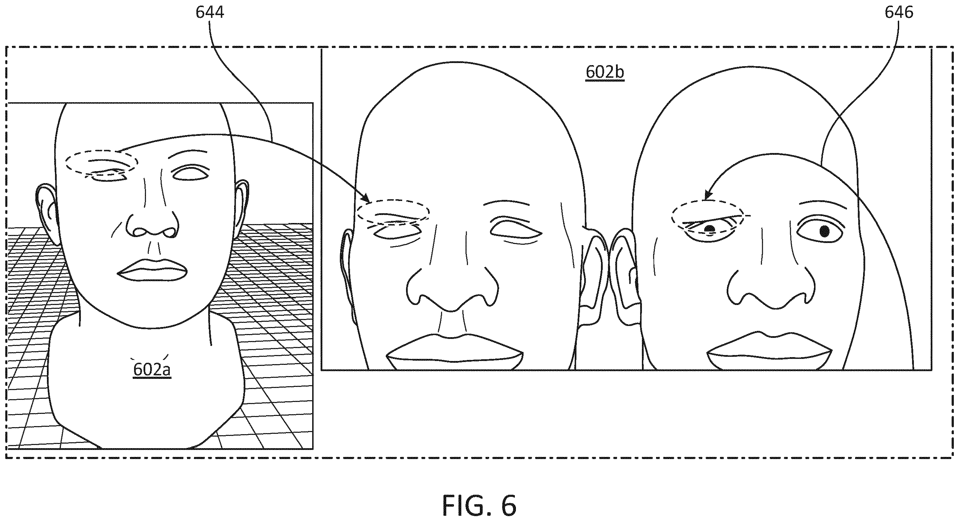

FIG. 6 illustrates a blending step where a subject's personal features or expressions 646 are merged into a stylized avatar 602b based on a different human model or avatar 602a, according to some embodiments. Some of the personalized features may include brow movement 644 in model 602a, which are converted into a personalized expression 646. Accordingly, brow movement 644 may be personalized in gesture 646 showing a lower brow for avatar 602b. The gesture is the same, but avatar 602b shows a brow style that is particular to the individual on which avatar 602b is based, and thus different from gesture 644 in avatar 602a. Other expressions may include the bulging of certain muscles in the forehead and facial gestures with the mouth and/or nostrils may be captured for a first model 602a and merged onto the human model in the stylized avatar 602b.

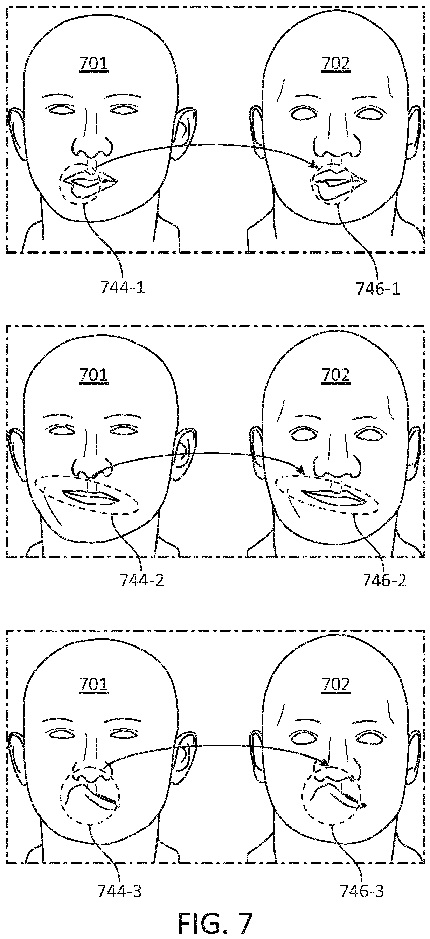

FIG. 7 illustrates a transfer of expressions 744-1, 744-2, and 744-3 (hereinafter, collectively referred to as "expressions 744") from a subject avatar 701 (*e.g.,* the user of a VR/AR headset) into personalized expressions 746-1, 746-2, and 746-3 (hereinafter, collectively referred to as "personalized expressions 746") in a target avatar 702, according to some embodiments. As can be seen, each expression 744 transferred to personalized expressions 746 in target avatar 702 contains the nuances and details of the personalized expression of target avatar 702.

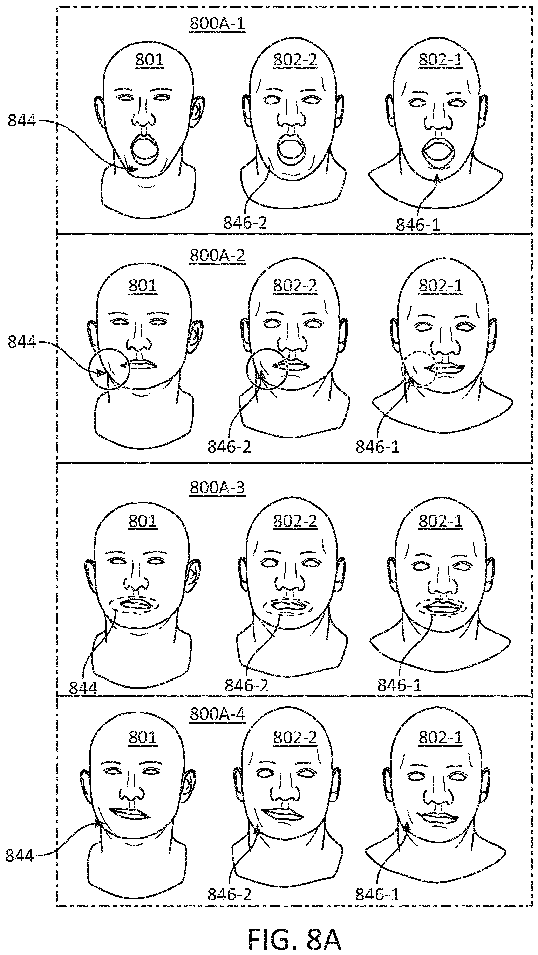

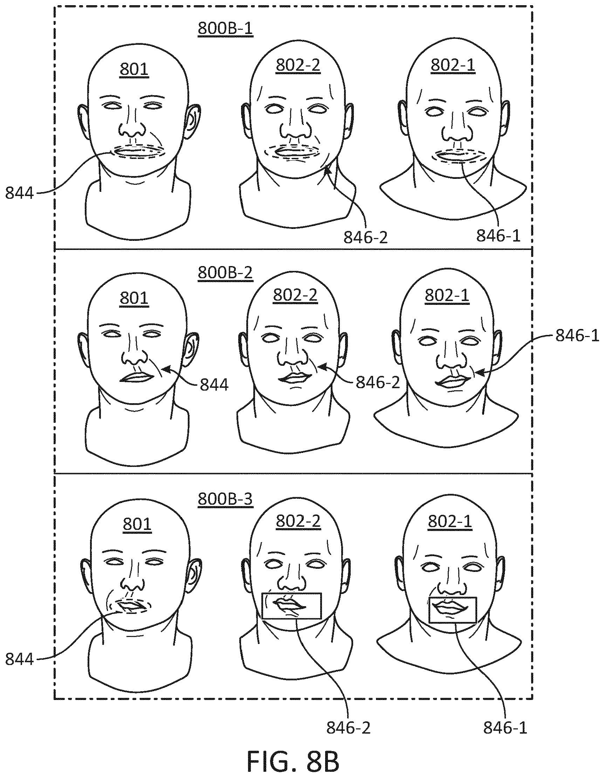

FIGS. 8A-8B include more exemplary panels 800A-1, 800A-2, 800A-3, 800A-4, 800B-1, 800B-2 and 800B-3 (hereinafter, collectively referred to as "panels 800") for transferring expressions 844 from a subject avatar 801 into target avatar 802-1 and 802-2 (hereinafter, collectively referred to as "target avatars 802"), to create personalized expressions 846-1 and 846-2 (hereinafter, collectively referred to as "personalized expressions 846"), according to some embodiments.

Subject avatar 801 belongs to a first identity (*e.g.,* a first user of a VR/AR headset), and target avatars 802 belong to a second identity (*e.g.,* a second user of a second VR/AR headset). For avatar 802-1, the transfer of expression 844 is generic, and many of the personal nuances of the second identity are not captured in transferred expressions 846-1. On the other hand, for avatar 802-1, the transfer of expressions 844 is personalized such that personalized expressions 846-2 are much more nuanced and reflective of the second identity.

Many nuances from facial expressions in the second identity are transferred to the stylized model 802-2 and then captured in the personalized expressions 846-2. In some embodiments, the personalized model uses an "averaged" shape between the subject and the model avatar, so they include more generic expressions. Accordingly, the personalized model, while still capturing some of the model features, includes more personalized expressions 846-2 based on the second identity, *e.g.,* a chin compression in panel 800A-1, a furrow in panels 800A-4, 800B-1, and 800B-2, a tension on lips in panel 800B-3, missing in avatar 802-1, and the like.

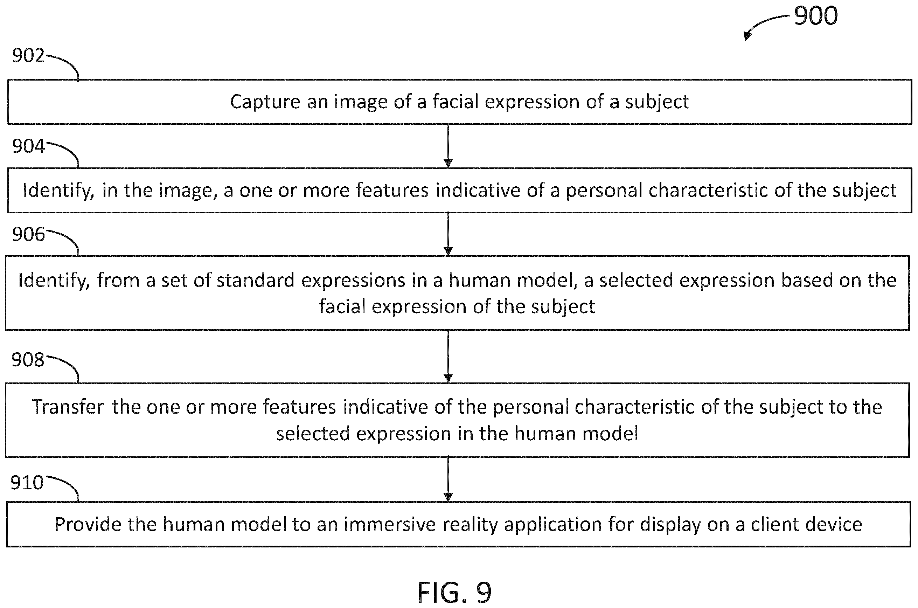

FIG. 9 is a flowchart including steps in a method 900 for creating a personalized stylized avatar for immersive reality applications, according to some embodiments. In some embodiments, one or more steps in method 900 may be performed by a processor circuit executing instructions stored in a memory circuit, in a computer, client device, server, or database, communicatively coupled via a network, as disclosed herein (*cf.* processors 212, memories 220, client devices 110, servers 130, database 152, and network 150). In some embodiments, the memory circuit may include an avatar engine having a mesh tool, a style tool, an expression encoder tool, an identity encoder tool, and a neural network tool, as disclosed herein (*cf.* avatar engine 232, mesh tool 240, style tool 242, expression encoder tool 244, identity encoder tool 246, and neural network tool 248). Steps in method 900 may be performed by a processor circuit in a computer, executing instructions stored in a memory circuit of the computer. In some embodiments, methods consistent with the present disclosure may include at least one or more of the steps in method 900, performed in a different order, simultaneously, quasi-simultaneously, or overlapping in time.

Step 902 includes capturing an image of a facial expression of a first subject. In some embodiments, the first subject is a user of an enhanced reality headset, and step 902 includes capturing the image with a camera mounted on the enhanced reality headset.

Step 904 includes identifying, in the image, a one or more features indicative of a personal characteristic of the first subject. In some embodiments, step 904 includes selecting from a mesh superimposed on the image of the facial expression of the first subject, a group of vertices that has moved by an amount larger than a selected threshold. In some embodiments, step 904 includes finding one or more critical points in a derivative tensor associated with a motion of a mesh for the image of the facial expression of the first subject. In some embodiments, step 904 includes identifying a displacement of one or more key points in a three-dimensional mesh associated with the image of the first subject.

Step 906 includes identifying, from a set of standard expressions in a human model, a selected expression based on the facial expression of the first subject. In some embodiments, step 906 includes finding a measure of a distance between multiple vertices in a mesh associated with the facial expression of the first subject and multiple vertices in a mesh associated with the human model having the selected expression. In some embodiments, step 906 includes selecting the human model as a stylized avatar of the human model.

Step 908 includes transferring the one or more features indicative of the personal characteristic of the first subject to the selected expression in the human model. In some embodiments, step 908 includes copying a movement of a group of vertices in a mesh for the first subject to a corresponding group of vertices in a mesh for the human model.

Step 910 includes providing the human model to an immersive reality application for display on a client device. In some embodiments, the client device is with a user, and step 910 further includes providing a second stylized human model modified with a facial expression of the user to the immersive reality application for display on a second client device with the first subject. In some embodiments, the immersive reality application is shared between the first subject and a second subject, and step 910 further includes providing a second stylized human model modified with a facial expression of the second subject to the display on the client device.

### Hardware Overview

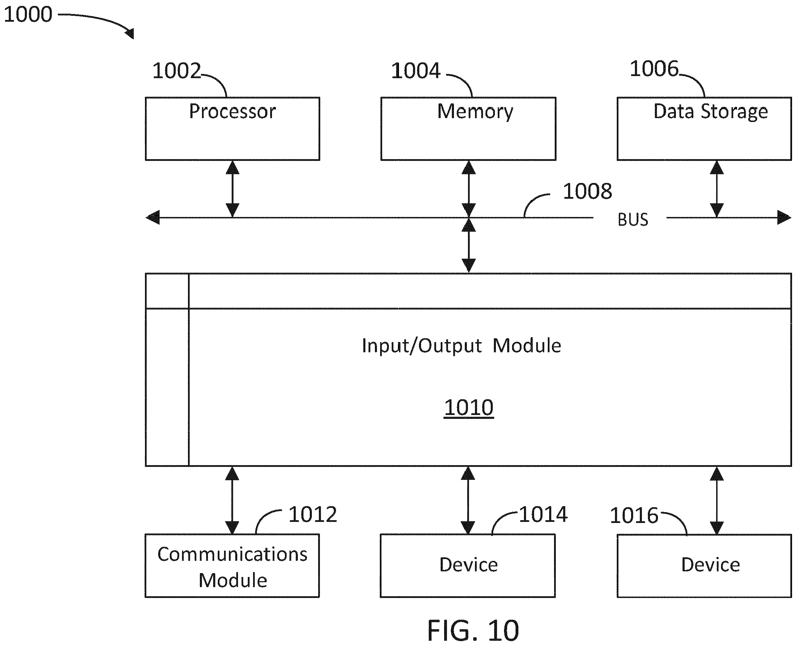

FIG. 10 is a block diagram illustrating an exemplary computer system 1000 with which headsets and other client devices 110, and method 900 can be implemented. In certain aspects, computer system 1000 may be implemented using hardware or a combination of software and hardware, either in a dedicated server, or integrated into another entity, or distributed across multiple entities. Computer system 1000 may include a desktop computer, a laptop computer, a tablet, a phablet, a smartphone, a feature phone, a server computer, or otherwise. A server computer may be located remotely in a data center or be stored locally.

Computer system 1000 includes a bus 1008 or other communication mechanism for communicating information, and a processor 1002 (*e*.*g*., processors 212) coupled with bus 1008 for processing information. By way of example, the computer system 1000 may be implemented with one or more processors 1002. Processor 1002 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 1000 can include, in addition to hardware, code that creates an execution environment for the computer program in question, *e*.*g*., code that constitutes processor firmware, a protocol stack, a database management system, an operating system, or a combination of one or more of them stored in an included memory 1004 (*e*.*g*., memories 220), such as a Random Access Memory (RAM), a flash memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled with bus 1008 for storing information and instructions to be executed by processor 1002. The processor 1002 and the memory 1004 can be supplemented by, or incorporated in, special purpose logic circuitry.

The instructions may be stored in the memory 1004 and implemented in one or more computer program products, *e.g*., one or more modules of computer program instructions encoded on a computer-readable medium for execution by, or to control the operation of, the computer system 1000, and according to any method well known to those of skill in the art, including, but not limited to, computer languages such as data-oriented languages (*e*.*g*., SQL, dBase), system languages *(e.g.,* C, Objective-C, C++, Assembly), architectural languages (*e.g.,* Java, .NET), and application languages (*e*.g*.*, PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, offside rule languages, procedural languages, reflective languages, rule-based languages, scripting languages, stack-based languages, synchronous languages, syntax handling languages, visual languages, wirth languages, and xml-based languages. Memory 1004 may also be used for storing temporary variable or other intermediate information during execution of instructions to be executed by processor 1002.

A computer program as discussed herein does not necessarily correspond to a file in a file system. A program can be stored in a portion of a file that holds other programs or data (*e.g.*, one or more scripts stored in a markup language document), in a single file dedicated to the program in question, or in multiple coordinated files (*e.g.,* files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 1000 further includes a data storage device 1006 such as a magnetic disk or optical disk, coupled with bus 1008 for storing information and instructions. Computer system 1000 may be coupled via input/output module 1010 to various devices. Input/output module 1010 can be any input/output module. Exemplary input/output modules 1010 include data ports such as USB ports. The input/output module 1010 is configured to connect to a communications module 1012. Exemplary communications modules 1012 include networking interface cards, such as Ethernet cards and modems. In certain aspects, input/output module 1010 is configured to connect to a plurality of devices, such as an input device 1014 and/or an output device 1016. Exemplary input devices 1014 include a keyboard and a pointing device, *e.g.,* a mouse or a trackball, by which a consumer can provide input to the computer system 1000. Other kinds of input devices 1014 can be used to provide for interaction with a consumer as well, such as a tactile input device, visual input device, audio input device, or brain-computer interface device. For example, feedback provided to the consumer can be any form of sensory feedback, e.g., visual feedback, auditory feedback, or tactile feedback; and input from the consumer can be received in any form, including acoustic, speech, tactile, or brain wave input. Exemplary output devices 1016 include display devices, such as an LCD (liquid crystal display) monitor, for displaying information to the consumer.

According to one aspect of the present disclosure, headsets and client devices 110 can be implemented, at least partially, using a computer system 1000 in response to processor 1002 executing one or more sequences of one or more instructions contained in memory 1004. Such instructions may be read into memory 1004 from another machine-readable medium, such as data storage device 1006. Execution of the sequences of instructions contained in main memory 1004 causes processor 1002 to perform the process steps described herein. One or more processors in a multi-processing arrangement may also be employed to execute the sequences of instructions contained in memory 1004. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back end component, e.g., a data server, or that includes a middleware component, *e.g.,* an application server, or that includes a front end component, *e.g.,* a client computer having a graphical consumer interface or a Web browser through which a consumer can interact with an implementation of the subject matter described in this specification, or any combination of one or more such back end, middleware, or front end components. The components of the system can be interconnected by any form or medium of digital data communication, e.g., a communication network. The communication network can include, for example, any one or more of a LAN, a WAN, the Internet, and the like. Further, the communication network can include, but is not limited to, for example, any one or more of the following network topologies, including a bus network, a star network, a ring network, a mesh network, a star-bus network, tree or hierarchical network, or the like. The communications modules can be, for example, modems or Ethernet cards.

Computer system 1000 can include clients and servers. A client and server are generally remote from each other and typically interact through a communication network. The relationship of client and server arises by virtue of computer programs running on the respective computers and having a client-server relationship to each other. Computer system 1000 can be, for example, and without limitation, a desktop computer, laptop computer, or tablet computer. Computer system 1000 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to processor 1002 for execution. Such a medium may take many forms, including, but not limited to, non-volatile media, volatile media, and transmission media. Non-volatile media include, for example, optical or magnetic disks, such as data storage device 1006. Volatile media include dynamic memory, such as memory 1004. Transmission media include coaxial cables, copper wire, and fiber optics, including the wires forming bus 1008. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter affecting a machine-readable propagated signal, or a combination of one or more of them.

In one aspect, a method may be an operation, an instruction, or a function and vice versa. In one aspect, a claim may be amended to include some or all of the words (*e*.*g*., instructions, operations, functions, or components) recited in either one or more claims, one or more words, one or more sentences, one or more phrases, one or more paragraphs, and/or one or more claims.

To illustrate the interchangeability of hardware and software, items such as the various illustrative blocks, modules, components, methods, operations, instructions, and algorithms have been described generally in terms of their functionality. Whether such functionality is implemented as hardware, software, or a combination of hardware and software depends upon the particular application and design constraints imposed on the overall system. Skilled artisans may implement the described functionality in varying ways for each particular application.

As used herein, the phrase "at least one of" preceding a series of items, with the terms "and" or "or" to separate any of the items, modifies the list as a whole, rather than each member of the list *(e.g.,* each item). The phrase "at least one of" does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The word "exemplary" is used herein to mean "serving as an example, instance, or illustration." Any embodiment described herein as "exemplary" is not necessarily to be construed as preferred or advantageous over other embodiments. Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the user technology, the disclosure, the present disclosure, other variations thereof and alike are for convenience only and do not imply that a disclosure relating to such phrase(s) is essential to the user technology or that such disclosure applies to all configurations of the user technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

A reference to an element in the singular is not intended to mean "one and only one" unless specifically stated, but rather "one or more." Pronouns in the masculine (*e*.*g*., his) include the feminine and neuter gender *(e.g.,* her and its) and vice versa. The term "some" refers to one or more. Underlined and/or italicized headings and subheadings are used for convenience only, do not limit the user technology, and are not referred to in connection with the interpretation of the description of the user technology. Relational terms such as first and second and the like may be used to distinguish one entity or action from another without necessarily requiring or implying any actual such relationship or order between such entities or actions. All structural and functional equivalents to the elements of the various configurations described throughout this disclosure that are known or later come to be known to those of ordinary skill in the art are expressly incorporated herein by reference and intended to be encompassed by the user technology. Moreover, nothing disclosed herein is intended to be dedicated to the public regardless of whether such disclosure is explicitly recited in the above description. No claim element is to be construed under the provisions of 35 U.S.C. §112, sixth paragraph, unless the element is expressly recited using the phrase "means for" or, in the case of a method claim, the element is recited using the phrase "step for."

While this specification contains many specifics, these should not be construed as limitations on the scope of what may be described, but rather as descriptions of particular implementations of the user matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially described as such, one or more features from a described combination can, in some cases, be excised from the combination, and the described combination may be directed to a subcombination or variation of a subcombination.

The user matter of this specification has been described in terms of particular aspects, but other aspects can be implemented and are within the scope of the above claims. For example, while operations are depicted in the drawings in a particular order, this should not be understood as requiring that such operations be performed in the particular order shown or in sequential order, or that all illustrated operations be performed, to achieve desirable results. The actions recited in the claims can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products.

The title, background, drawings and description thereof are hereby incorporated into the disclosure and are provided as illustrative examples of the disclosure, not as restrictive descriptions. It is submitted with the understanding that they will not be used to limit the scope or meaning of the claims. In addition, in the detailed description, it can be seen that the description provides illustrative examples, and the various features are grouped together in various implementations for the purpose of streamlining the disclosure. The method of disclosure is not to be interpreted as reflecting an intention that the described user matter requires more features than are expressly recited in each claim. Rather, as the claims reflect, inventive user matter lies in less than all features of a single disclosed configuration or operation. The claims are hereby incorporated into the detailed description, with each claim standing on its own as a separately described user matter.

The claims are not intended to be limited to the aspects described herein but are to be accorded the full scope consistent with the language claims and to encompass all legal equivalents. Notwithstanding, none of the claims are intended to embrace user matter that fails to satisfy the requirements of the applicable patent law, nor should they be interpreted in such a way.

## Claims

1. A computer-implemented method, comprising:
capturing an image of a facial expression of a first subject;
identifying, in the image, a one or more features indicative of a personal characteristic of the first subject;
identifying, from a set of standard expressions in a human model, a selected expression based on the facial expression of the first subject;
transferring the one or more features indicative of the personal characteristic of the first subject to the selected expression in the human model; and
providing the human model to an immersive reality application for display on a client device.

2. The computer-implemented method of claim 1, wherein the first subject is a user of an enhanced reality headset, and capturing the image of the facial expression of the first subject comprises capturing the image with a camera mounted on the enhanced reality headset.

3. The computer-implemented method of claim 1 or claim 2, wherein identifying the one or more features indicative of a personal characteristic of the first subject comprises one or more of:
(a) selecting, from a mesh superimposed on the image of the facial expression of the first subject, a group of vertices that has moved by an amount larger than a selected threshold;
(b) finding one or more critical points in a derivative tensor associated with a motion of a mesh for the image of the facial expression of the first subject;
(c) identifying a displacement of one or more key points in a three-dimensional mesh associated with the image of the first subject.

4. The computer-implemented method of any one of claims 1 to 3, wherein identifying a selected expression based on the facial expression of the first subject comprises finding a measure of a distance between multiple vertices in a mesh associated with the facial expression of the first subject and multiple vertices in a mesh associated with the human model having the selected expression.

5. The computer-implemented method of any one of claims 1 to 4, further comprising selecting the human model as a stylized avatar of the human model.

6. The computer-implemented method of any one of claims 1 to 5, wherein transferring the one or more features indicative of a personal characteristic of the first subject to the selected expression in the human model comprises copying a movement of a group of vertices in a mesh for the first subject to a corresponding group of vertices in a mesh for the human model.

7. The computer-implemented method of any one of claims 1 to 6, wherein the client device is with a user, further comprising providing a second stylized human model modified with a facial expression of the user to the immersive reality application for display on a second client device with the first subject.

8. The computer-implemented method of any one of claims 1 to 7, wherein the immersive reality application is shared between the first subject and a second subject, further comprising providing a second stylized human model modified with a facial expression of the second subject to the display on the client device.

9. A system, comprising:
a memory storing multiple instructions; and
one or more processors configured to execute the instructions to perform operations, the operations comprising:
to capture an image of a facial expression of a first subject;
to identify, in the image, a one or more features indicative of a personal characteristic of the first subject;
to identify, from a set of standard expressions in a human model, a selected expression based on the facial expression of the first subject;
to transfer the one or more features indicative of the personal characteristic of the first subject to the selected expression in the human model; and
to provide the human model to an immersive reality application for display on a client device.

10. The system of claim 9, wherein the first subject is a user of an enhanced reality headset, and to capture the image of the facial expression of the first subject the one or more processors execute instructions to capture the image with a camera mounted on the enhanced reality headset.

11. The system of claim 9 or 10, wherein to identify the one or more features indicative of a personal characteristic of the first subject the one or more processors execute instructions to perform operations comprising one or more of:
(a) select, from a mesh superimposed on the image of the facial expression of the first subject, a group of vertices that has moved by an amount larger than a selected threshold;
(b) find one or more critical points in a derivative tensor associated with a motion of a mesh for the image of the facial expression of the first subject;
(c) identify a displacement of one or more key points in a three-dimensional mesh associated with the image of the first subject.

12. The system of any one of claims 9 to 11, wherein to identify a selected expression based on the facial expression of the first subject the one or more processors execute instructions to find a measure of a distance between multiple vertices in a mesh associated with the facial expression of the first subject and multiple vertices in a mesh associated with the human model having the selected expression.

13. The system of any one of claims 9 to 12, wherein the one or more processors further execute instructions to select the human model as a stylized avatar of the human model.

14. The system of any one of claims 9 to 13, wherein to transfer the one or more features indicative of a personal characteristic of the first subject to the selected expression in the human model the one or more processors execute instructions to copy a movement of a group of vertices in a mesh for the first subject to a corresponding group of vertices in a mesh for the human model.

15. The system of any one of claims 9 to 14, wherein the immersive reality application is shared between the first subject and a second subject, and the one or more processors further execute instructions to provide a second stylized human model modified with a facial expression of the second subject to the display on the client device.
